# EUROPEAN PATENT SPECIFICATION

(11) **EP 1 350 263 B1**
(45) Date of publication and mention of the grant of the patent: **24.05.2006**
(21) Application number: 01985648.3
(22) Date of filing: 29.10.2001
(51) Int. Cl.: B60R 21/20, B60R 21/16

(54) **AIR BAG TETHER SYSTEM COMPRISING MULTI-SEGMENT TETHERS**
AIRBAG-ANBINDUNGSSYSTEM MIT MEHRSEGMENTBINDERN
SYSTEME DE FIXATION DE COUSSIN GONFLABLE DE SECURITE COMPRENANT DES ATTACHES A SEGMENTS MULTIPLES

(30) Priority: 13.11.2000 US 711418; 22.08.2001 US 934932
(43) Date of publication of application: 08.10.2003
(73) Proprietor: Milliken & Company, Spartanburg, SC 29304 (US)
(72) Inventor: KESHAVARAJ, Ramesh, Peachtree City, GA 30269 (US)
(74) Representative: HOFFMANN EITLE
(86) International application number: PCT/US2001/051178
(87) International publication number: WO 2002/037941

(56) References cited:
- EP-A- 0 611 683
- EP-A- 1 334 011
- DE-A- 4 240 227
- GB-A- 2 243 119
- US-A- 5 378 011
- US-A- 5 393 092
- US-A- 5 613 708
- US-A- 5 669 632
- US-A- 5 848 805
- US-A- 6 086 096

## Description

### REFERENCE TO RELATED APPLICATIONS

This application is a continuation-in-part of co-pending U.S. Patent Application, Serial No. 09/711,418, filed November 13, 2000, titled "Multi-Segment Air Bag Tether Construction."

### TECHNICAL FIELD

This disclosure relates to multi-segment air bag tether systems and to a pattern-wise arrangement of such tether segments in relation to air bag panels on a fabric blank, thus resulting in increased fabric utilization and an overall cost savings per finished air bag. The air bag tether system as described herein is comprised of two multi-segment congruent tether groups that are joined to one another and to a respective air bag panel. The segments that comprise each tether group are cut substantially on the bias with respect to the warp or the fill of the fabric blank. This multi-segment construction decreases the amount of fabric that is used in the manufacture of the air bag and tether systems, while providing sufficient elongation for the tether system to be functional.

### BACKGROUND

Because of the speed with which an air bag inflates, it is necessary for the protection of vehicle occupants to control the volume of space that the air bag occupies in the vehicle cabin. Traditionally, air bag tethers have been used to control the excursion of an air bag as it inflates. As gas is released, causing the air bag to rapidly inflate, it is necessary to keep such inflation from occurring in an uncontrolled manner. Tethers, which are sewn to the interior portions of the front and rear panels of an air bag, keep the inflating air bag from expanding so rapidly as to adversely affect the safety of the vehicle occupant, as the vehicle occupant contacts the air bag.

Tethers are conventionally strip-shaped pieces of fabric that are aligned in pattern-wise arrangement on a fabric blank, or that are aligned in relation to air bag panels that may be cut from the same blank. These tethers typically include a circular portion in the center area of the tether strip used for attachment of the tether strip to the air bag panel. It is understood in the industry that such tethers should have a capacity for elongation (that is, the tethers should be able to stretch to accommodate the rapid excursion of the bag). For this reason, conventional strip-shaped tethers have historically been cut on the bias with respect to the warp and fill of the fabric. However, utilizing these one-piece tethers increases the amount of fabric needed to create an appropriate number of tethers for a plurality of air bags, thus resulting in increased production costs.

EP 0611 683 A discloses an airbag according to the preamble of claim 1.

### SUMMARY

The present air bag tether system, with groups of tether segments attached to each bag panel, addresses the problems of fabric utilization and tether elongation. Using a multi-segment tether system in place of conventional one-piece tethers improves fabric utilization by allowing these bias-cut tether segments to be arranged around air bag panels into spaces that might otherwise be considered fabric waste. The segments that comprise the tether groups are each cut substantially on a bias with respect to the warp and fill of the fabric blank. This multi-segment approach, rather than one-piece tethers, leads to an improved fabric utilization, while providing a tether system that is capable of sustaining the forces exerted by the inflating air bag.

### BRIEF DESCRIPTION OF THE DRAWINGS

**Figure 1** shows a side view of an air bag comprised of a front bag panel and a rear bag panel;
**Figure 2** shows a cross-sectional view of the air bag of **FIG. 1,** revealing a tether system incorporated therein;
**Figure 3A** shows a plan view of a tether segment of the present invention that is cut substantially on the bias with respect to the warp or fill of a fabric blank;
**Figure 3B** shows a plan view of a circular reinforcement as may be included in the air bag tether system of the present invention;
**Figure 3C** shows a plan view of a multi-segment tether group, as comprised of two of the tether segments of **FIG. 3A** and the circular reinforcement of **FIG. 3B;**
**Figure 3D** shows a plan view of a multi-segment tether group, in which two of the tether segments of **FIG. 3A** are attached to an air bag panel by a circular seam, but without the inclusion of the circular reinforcement of **FIG. 3B;**
**Figure 4** shows a plan view of a multi-segment tether group that is suitable for attachment to an air bag panel and that is comprised of three of the tether segments of **FIG. 3A** and the circular reinforcement of **FIG. 3B;**
**Figure 5** shows a plan view of a multi-segment tether group that is suitable for attachment to an air bag panel and that is comprised of four of the tether segments of **FIG. 3A** and the circular reinforcement of **FIG. 3B;**
**Figure 6A** shows a plan view of an alternate pattern for the tether segment of the present invention, as would be attached to the front panel of an air bag;
**Figure 6B** shows a plan view of an alternate pattern for the tether segment of the present invention, as would be attached to the rear panel of an air bag;
**Figure 6C** shows a plan view of a multi-segment tether group, as comprised of two of the tether segments of **FIG. 6A,** as would be attached to the front panel of an air bag;
**Figure 6D** shows a plan view of a multi-segment tether group, as comprised of two of the tether segments of **FIG. 6B,** as would be attached to the rear panel of an air bag;
**Figure 7A** shows a plan view of yet another alternate pattern for a tether segment of the present invention;
**Figure 7B** shows a plan view of a circular reinforcement as may be included with the tether segments of **FIG. 7A;** and
**Figure 7C** shows a plan view of a multi-segment tether group, as comprised of two of the tether segments of **FIG. 7A** and the circular reinforcement of **FIG. 7B,** as would be attached to an air bag panel.

### DETAILED DESCRIPTION

In order to describe the invention, it is necessary that certain terms be defined. The term "substantial bias" is intended to refer to a cut made diagonally across the weave of a fabric at an angle of 25 to 65 degrees with respect to the warp and fill. The term "front" shall refer to that portion of an air bag that is nearest a vehicle occupant, while the term "rear" shall refer to those portions of an air bag that are furthest from the vehicle occupant (e.g., in the case of front-seat air bags, nearest the windshield). The term "tether segment" refers to a component of a tether system that is attached to a first air bag panel and to a tether segment that is attached to the second air bag panel (for instance, a tether segment on the front bag panel is attached to a corresponding tether segment on the rear bag panel). Each tether segment is cut on the bias with respect to the warp and fill of a textile fabric. The term "tether group" shall refer to two or more tether segments attached to an air bag panel, with or without the inclusion of a reinforcement between them. The term "tether system" shall refer to a pair of tether groups joined along their respective end portions, which in combination succeed in preventing the uncontrolled excursion of an inflating air bag from adversely affecting a vehicle occupant with whom such a bag comes into contact.

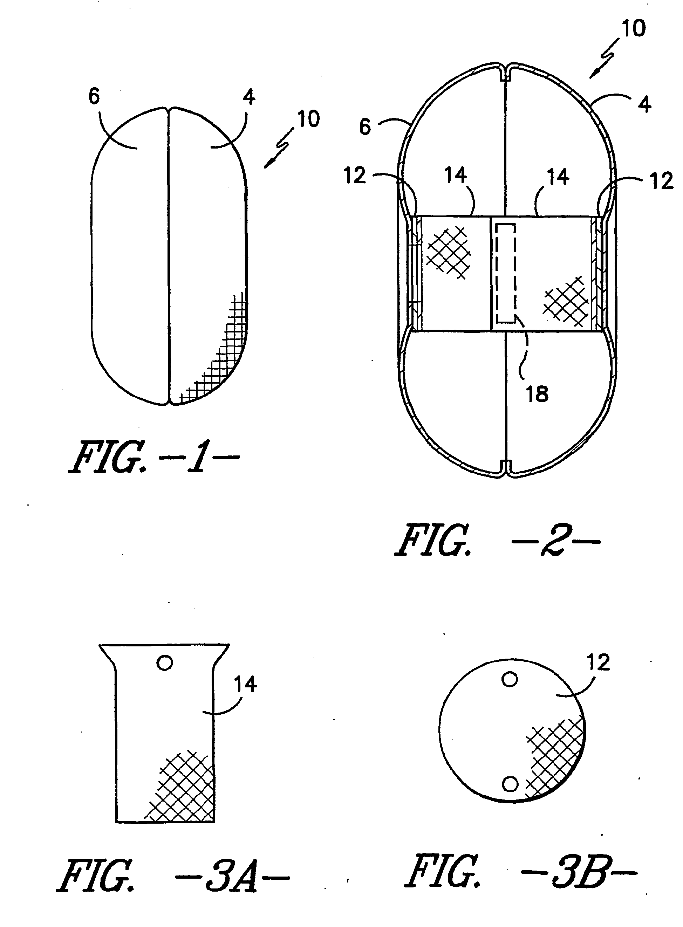

Turning now to the **Figures, FIG. 1** shows a side view of an air bag **10.** Air bag **10** is comprised of a front bag panel **4** and a rear bag panel **6,** panels **4** and **6** being substantially circular, although other panel geometries could also be used.

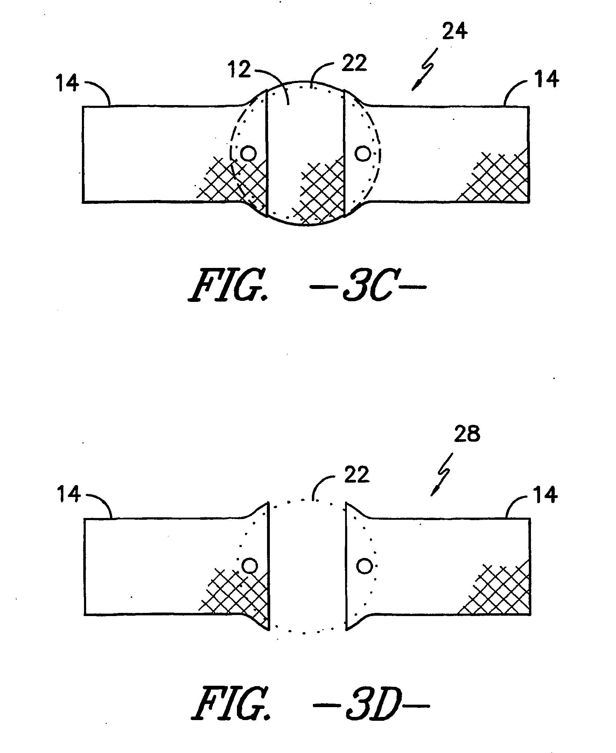

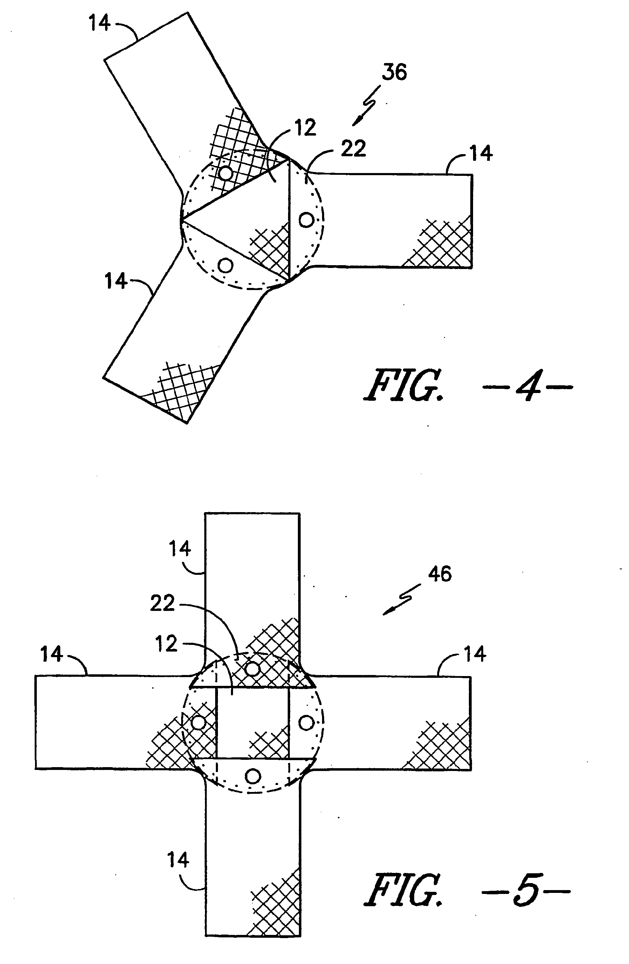

**FIG. 2** shows a cross-sectional view of air bag **10,** revealing the arrangement of a tether system therein. Tether segments **14** (shown in **FIG. 3A** as being cut substantially on the bias with respect to the warp or the fill of a fabric blank) are attached to front bag panel **4** and rear bag panel **6.** Tether segments **14** are shown in lapped fashion in the interior of air bag **10.** The joining of tether segments **14** is shown as being achieved by means of rectangular seam **18,** but such joining may be accomplished by any other means, such as welding, gluing, or other seaming techniques. Tether segments **14** are substantially rectangular in shape, each having one flared end which is positioned toward the center area of respective bag panels **4, 6.**

Reinforcement **12** (shown in **FIG. 3B**) may also be attached to front bag panel **4,** as well as rear bag panel **6.** It is common for reinforcements, having a circular or other shape, to be used in the production of air bags **10.** Reinforcements **12** may be circular in shape or may, for example, be in the shape of an *n*-sided polygon (where n is in the range of 4 to 12). In one embodiment, reinforcements **12** are included with tether segments **14** to form tether panel **24.** Such reinforcements **12** are particularly important in preventing tears around the mouth of air bag **10,** at the location of the inflation media.

Tether segment **14** is part of a multi-segment tether panel **24** that is shown in **FIG. 3C.** Tether panel **24** is comprised of two tether segments **14** and at least one reinforcement **12.** Tether segments **14** and reinforcement **12** are secured to one another and to a bag panel **4** or **6** by seam **22,** as indicated by a dotted line in **FIG. 3C.** It should be noted that tether segments **14** are cut substantially on the bias with respect to the warp or the fill of a fabric blank. The angle of the bias cut should be in the range of 25 to 65 degrees, and preferably an angle of about 45 degrees.

**FIG. 3D** shows a variation of tether panel **24** of **FIG. 3C.** In this embodiment, reinforcement **12** is omitted. Tether segments **14** are attached to bag panel 4 or 6 by means of seam **22.** In this variation, tether segments **14** do not contact one another, but nevertheless act in cooperation with one another and bag panel 4 (not shown) to form tether group **28.**

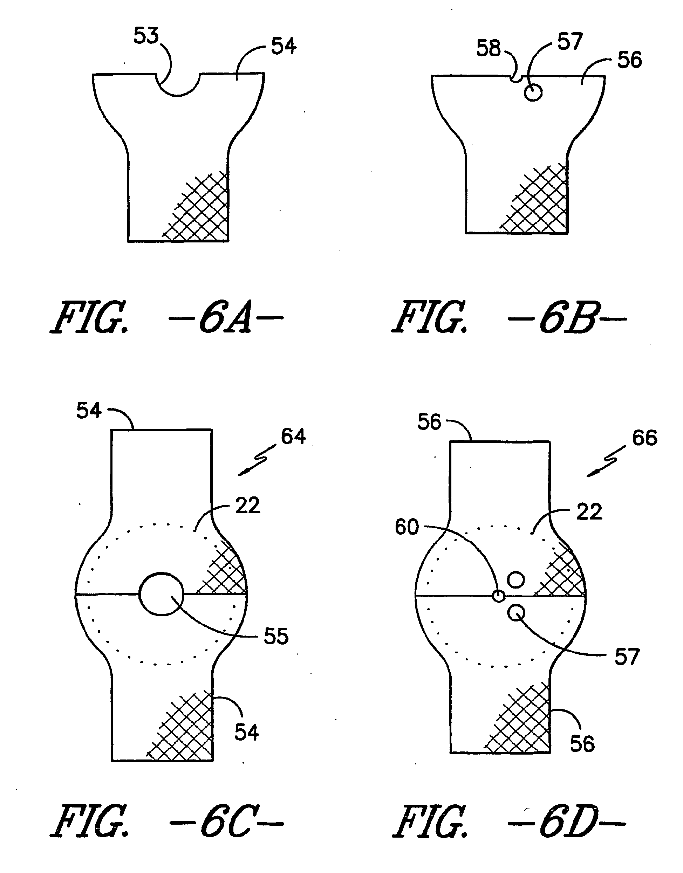

Turning now to **FIG. 4,** a three-segment tether panel **34** is shown. Three-segment tether panel **34** is comprised of three tether segments **14** and reinforcement **12.** Tether segments **14** and reinforcement **12** may be secured to bag panel 4 or 6 by means of seam **22.** Three-segment tethers **34** are useful for reducing bag oscillation during deployment.

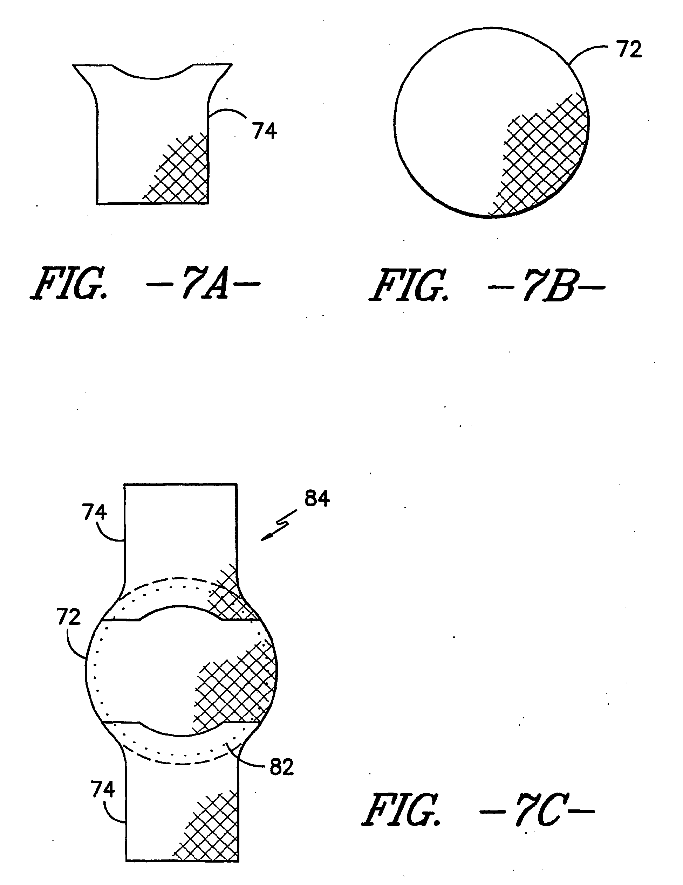

**FIG. 5** shows a four-segment tether panel **44.** Four-segment tether panel **44** is comprised of four tether segments **16** and reinforcement **12.** Seam **22** secures tether segments **16** and reinforcement **12** to bag panel **4** or **6.** Four-segment tether panels **44** have an even greater ability to reduce oscillation during bag deployment.

**FIG. 6A** shows a variation of tether segment **14.** Front tether segment **54** has a widened end portion that eliminates the need for reinforcement **12.** An arc **53** in the central portion of the widened end provides half of what will be an opening **55** in front tether **64 (see FIG. 6C).** Opening **55** is useful for alignment of segments **54.** Seam **22** may be used to attach tether segments **54** to front bag panel 4 to create front tether panel **64.**

**FIG. 6B** shows a variation of tether segment **14,** as would be attached to rear bag panel **6.** Rear tether segment **56** has a widened end, similar to that of front tether segment **54.** Rear tether segment **56** is also cut on the bias with respect to the warp and fill of a fabric blank. Tether segment **56** has a small arc **58** in the central portion of the widened end, which provides half of what will be an opening **60** in rear tether panel **66** (see **FIG. 6D).** Opening **60** is used to insert inflation media into the air bag. Tether segment 56 also has a ventilation opening **57** that is also present in rear tether panel **66.** Again, seam **22** may be used to secure tether segments **56** to rear bag panel **6.** Reinforcement **12** is not necessary, but may be used for additional support, if desired.

**FIG. 7A** shows yet another variation of tether segment **14.** Tether segment **74** has an arced end portion and is slightly truncated in comparison to tether segment **14.** Like tether segment **14,** tether segment **74** also is cut substantially on the bias with respect to the warp and fill of a fabric blank.

**FIG. 7B** shows a reinforcement **72** as may be used with tether segment **74.** As illustrated in **FIG. 7C,** tether panel **84** is comprised of two tether segments **74** and reinforcement **72.** Seam **82** may be used to secure tether segments **74** and reinforcement **72** to one another and to bag panel **4** or **6.** Like reinforcement **12,** reinforcement **72** may be circular in shape or may be in the shape of an *n*-sided polygon (where *n* is in the range of 4 to 12).

The multi-segment tether system of the present invention includes multiple tether segments **14** (or altemately **54** or **74**) and may or may not include reinforcements **12** (or alternately **72**). These tether segments **14** are positioned with one end portion secured to the central area of bag panel **4** or **6** and one end portion directed toward the periphery of bag panel **4** or **6.** The tether system is formed by joining the periphery end portions of tether segments **14** that are attached to front bag panel **4** to the periphery end portions of tether segments **14** that are attached to rear bag panel **6.** Although sewing is a preferred means of attaching tether system components (e.g., seams **18, 22,** and **82),** other attachment means can be employed, such as welding, gluing, and the like.

By incorporating these various multi-segment tether systems, the present invention represents a useful advancement over the prior art.

## Claims

1. An air bag (10) comprising a front bag panel (4) and a rear bag panel (6), said bag panels (4, 6) having a central area and a periphery area,
said air bag (10) further comprising a tether system positioned between said front bag panel (4) and said rear bag panel (6), said tether system comprising a first group of tether segments (24; 28)and a second group of tether segments (24, 28) ;
wherein each tether segment (14, 54, 56, 74) of said first group of tether segments has a bag attachment portion that is attached to the center area of said front bag panel (4) and a tether attachment end portion that is positioned toward the periphery of said front bag panel (4), and
wherein each tether segment (14, 54, 56, 74) of said second group of tether segments has a bag attachment portion that is attached to the center area of said rear bag panel (6) and a tether attachment end portion that is positioned toward the periphery of said rear bag panel (6),
and wherein the tether attachment end portions of said first group of tether segments(24, 28) are attached to the tether attachment end portions of said second group of tether segments (14, 54, 56, 74),
each of said first and second groups of tether segments (24, 28) being cut from a textile fabric having a group of warp yarns and a group of fill yarns, said tether segments (14, 54, 56, 74) being cut substantially on a bias with respect to said groups of yarns, **characterised in that** each tether segment (14, 54, 56, 74) of said first and second group of tether segments is of a rectangular shape, and each bag attachment portion of each tether segment (14, 54, 56, 74) of said first and second group of tether segments in a flared bag attachment and portion.

2. The air bag (10) of Claim 1 wherein said first group of tether segments (24, 28) has a first and a second tether segment (14), the flared bag attachment end portion of said first tether segment (14) being positioned around the central area of said front bag panel (4) in opposed relation to the flared bag attachment end portion of said second tether segment (14), the flared bag attachment end portions of said first and second tether segments (14) being attached to said front bag panel (4),
and wherein said second group of tether segments (24, 28) has a third and a fourth tether segment, the flared bag attachment end portion of said third tether segment (14) being positioned around the central area of said rear bag panel (6) in opposed relation to the flared bag attachment end portion of said fourth tether segment (14), the flared bag attachment end portions of said third and fourth tether segments (14) being attached to said rear bag panel (6).

3. The air bag (10) of Claim 1 wherein said first group of tether segments (36) has three tether segments (14) that are positioned around the central area of said front bag panel (4) such that the tether attachment end portions of said tether segments (14) form the vertices of a triangle
and wherein said second group of tether segments (36) has three tether segments that are positioned around the central area of said rear bag panel (6) such that the tether attachment end portions of said tether segments form the vertices of a triangle.

4. The air bag (10) of Claim 3 wherein the tether attachment end portions of said tether segments (36) form the vertices of an equilateral triangle.

5. The air bag (10) of Claim 1 wherein said first group of tether segments (46) has four tether segments (14), said four tether segments having flared bag attachment end portions that are positioned as opposed pairs around the central area of said front bag panel (4), the flared bag attachment end portions of said first group of tether segments (46) being attached to said front bag panel (4),
and wherein said second group of tether segments (46) has four tether segments (14), said four tether segments having flared bag attachment end portions that are positioned as opposed pairs around the central area of said rear bag panel (6), the flared bag attachment end portions of said second group of tether segments (46) being attached to said rear bag panel (6).

6. The air bag (10) of Claim 1 wherein said tether segments (14) are cut at a 45 degree bias.

7. The air bag (10) of Claim 1 wherein the flared bag attachment end portions of said tether segments (14) are attached to said bag panels (4, 6) by sewn seams (22).

8. The air bag (10) of claim 1 wherein the periphery end portion of each tether segment (14, 54, 56, 74) of said first group of tether segments (24) is attached to the corresponding tether attachment end portion of each tether segment (14, 54, 56, 74) of said second group of tether segments (24) by sewn seams (22).

9. The air bag (10) of Claim 1 wherein said tether system further comprises at least one reinforcement (12, 72) positioned at the central area of one of said bag panels (4, 6) said reinforcement (12, 72) further being attached to the flared bag attachment end portions of said tether segments (14).

10. The air bag (10) of Claim 9 wherein said tether system comprises two to five reinforcements (12, 72) attached to the central area of said rear bag panel (6).

11. The air bag (10) of Claim 9 wherein said reinforcements (12, 72) are substantially circular in shape.

12. The air bag (10) of Claim 1 wherein said tether segments (14) are cut from said textile fabric that is coated.

13. The air bag (10) of Claim 1 wherein said tether segments (14) are cut from said textile fabric that is laminated.

14. A tether group (24, 28, 36, 46, 64, 66, 84) to be used in a tether system of an air bag, said tether group comprising at least two tether segments (14, 54, 56, 74) wherein each of said tether segments is of a rectangular shape and has a flared bag attachment end portion and a tether attachment end portion, the flared bag attachment end portions being positioned in opposed relation to one another, and
wherein each of said tether segments is cut from a textile fabric having a group of warp yarns and a group of fill yarns, said tether segments being cut substantially on a bias with respect to said groups of yarns.

15. The tether group (24, 28, 64, 66, 84) of Claim 14 wherein said tether group comprises two tether segments (14, 54, 56, 74) whose flared bag attachment end portions are positioned in opposed relation to one another.

16. The tether group (36) of Claim 14 wherein said tether group comprises three tether segments (14) whose flared bag attachment end portions form the vertices of a triangle.

17. The tether group (46) of Claim 14 wherein said tether group comprises four tether segments (14) whose flared bag attachment end portions are positioned as opposed pairs.

18. The tether group of Claim 14 further comprising a reinforcement (12, 72) positioned between and attached to the flared bag attachment end portions of said tether segments (14, 74).

19. The tether group of Claim 18 wherein said reinforcement (12, 72) is substantially circular in shape.

20. The tether group of Claim 18 wherein said reinforcement is substantially polygonal in shape.

## Patentansprüche

1. Airbag (10), umfassend ein vorderes Airbagfeld (4) sowie ein rückwärtiges Airbagfeld (6), wobei die Airbagfelder (4, 6) einen zentralen Bereich sowie einen umfänglichen Bereich aufweisen,
der Airbag (10) des Weiteren ein Haltegurt-System umfasst, das zwischen dem vorderen Airbagfeld (4) und dem rückwärtigen Airbagfeld (6) positioniert.ist, wobei das Haltegurt-System eine erste Gruppe von Haltegurt-Segmenten (24, 28) sowie eine zweite Gruppe von Haltegurt-Segmenten (24, 28) umfasst;
wobei jedes Haltegurt-Segment (14, 54, 56, 74) der ersten Gruppe von Haltegurt-Segmenten einen Airbag-Anbringungsabschnitt aufweist, der an dem zentralen Bereich des vorderen Airbagfelds (4) angebracht ist, sowie einen Haltegurt-Anbringungs-Endabschnitt, der auf den Umfang des vorderen Airbagfelds (4) hin positioniert ist, und
wobei jedes Haltegurt-Segment (14, 54, 56, 74) der zweiten Gruppe von Haltegurt-Segmenten einen Airbag-Anbringungsabschnitt aufweist, der am zentralen Bereich des rückwärtigen Airbagfelds (6) angebracht ist, sowie einen Haltegurt-Anbringungs-Endabschnitt, der auf den Umfang des rückwärtigen Airbagfelds (6) hin positioniert ist,
und wobei die Haltegurt-Anbringungs-Endabschnitte der ersten Gruppe von Haltegurt-Segmenten (24, 28) an den Haltegurt-Anbringungs-Endabschnitten der zweiten Gruppe von Haltegurt-Segmenten (14, 54, 56, 74) angebracht sind,
wobei jede der ersten und zweiten Gruppen von Haltegurt-Segmenten (24, 28) aus einem Textilgewebe geschnitten ist, das eine Gruppe von Kettfäden sowie eine Gruppe von Schussfäden aufweist, wobei die Haltegurt-Segmente (14, 54, 56, 74) im Wesentlichen schräg in Bezug auf die Gruppen von Fäden geschnitten sind, **dadurch gekennzeichnet, dass** jedes Haltegurt-Segment (14, 54, 56, 74) der ersten und zweiten Gruppe von Haltegurt-Segmenten eine rechteckige Form aufweist und jeder Airbag-Anbringungsabschnitt jedes Haltegurt-Segments (14, 54, 56, 74) der ersten und zweiten Gruppen von Haltegurt-Segmenten ein aufgeweiteter Airbag-Anbringungs-Endabschnitt ist.

2. Airbag (10) gemäß Anspruch 1, wobei die erste Gruppe von Haltegurt-Segmenten (24, 38) ein erstes und ein zweites Haltegurt-Segment (14) aufweist, wobei der aufgeweitete Airbag-Anbringungs-Endabschnitt des ersten Haltegurt-Segments (14), das um den zentralen Bereich des vorderen Airbagfelds (4) in entgegengesetzter Beziehung zum aufgeweiteten Airbag-Anbringungs-Endabschnitt des zweiten Haltegurt-Segments (14) positioniert ist, wobei die aufgeweiteten Airbag-Anbringungs-Endabschnitte der ersten und zweiten Haltegurt-Segmente (14) an dem vorderen Airbagfeld (4) angebracht ist,
und wobei die zweite Gruppe von Haltegurt-Segmenten (24, 28) dritte und vierte Haltegurt-Segmente aufweist, der aufgeweitete Airbag-Anbringungs-Endabschnitt des dritten Haltegurt-Segments (14) um den zentralen Bereich des rückwärtigen Airbagfelds (6) in gegenüberliegender Beziehung zum aufgeweiteten Airbag-Anbringungs-Endabschnitt des vierten Haltegurt-Segments (14) positioniert ist, und die aufgeweiteten Airbag-Anbringungs-Endabschnitte der dritten und vierten Haltegurt-Segmente (14) an dem rückwärtigen Airbagfeld (6) angebracht sind.

3. Airbag (10) gemäß Anspruch 1, wobei die erste Gruppe von Haltegurt-Segmenten (36) drei Haltegurt-Segmente (14) aufweist, die um den zentralen Bereich des vorderen Airbagfelds (4) auf eine solche Weise positioniert sind, dass die Haltegurt-Anbringungs-Endabschnitte der Haltegurt-Segmente (14) die Eckpunkte eines Dreiecks ausbilden
und wobei die zweite Gruppe von Haltegurt-Segmenten (36) drei Haltegurt-Segmente aufweist, die um den zentralen Bereich des rückwärtigen Airbagfelds (6) in einer solchen Weise positioniert sind, dass die Haltegurt-Anbringungs-Endabschnitte der Haltegurt-Segmente die Eckpunkte eines Dreiecks ausbilden.

4. Airbag (10) gemäß Anspruch 3, wobei die Haltegurt-Anbringungs-Endabschnitte der Haltegurt-Segmente (36) die Eckpunkte eines gleichschenkligen Dreiecks ausbilden.

5. Airbag (10) gemäß Anspruch 1, wobei die erste Gruppe von Haltegurt-Segmenten (46) vier Haltegurt-Segmente (14) aufweist, wobei die vier Haltegurt-Segmente aufgeweitete Airbag-Anbringungs-Endabschnitte aufweisen, die als gegenüberliegende Paare um den zentralen Bereich des vorderen Airbagfelds (4) positioniert sind, wobei die aufgeweiteten Airbag-Anbringungs-Endabschnitte der ersten Gruppe von Haltegurt-Segmenten (46) an dem vorderen Airbagfeld (4) angebracht sind,
und wobei die zweite Gruppe von Haltegurt-Segmenten (46) vier Haltegurt-Segmente (14) aufweist, wobei die vier Haltegurt-Segmente aufgeweitete Airbag-Anbringungs-Endabschnitte aufweisen, die als gegenüberliegende Paare um den zentralen Bereich des rückwärtigen Airbagfelds (6) positioniert sind und die aufgeweiteten Airbag-Anbringungs-Endabschnitte der zweiten Gruppe von Haltegurt-Segmenten (46) an dem rückwärtigen Airbagfeld (6) angebracht sind.

6. Airbag (10) gemäß Anspruch 1, wobei die Haltegurt-Segmente (14) um 45 Grad schräg geschnitten sind.

7. Airbag (10) gemäß Anspruch 1, wobei die aufgeweiteten Airbag-Anbringungs-Endabschnitte der Haltegurt-Segmente (14) an den Airbagfelden (4, 6) durch genähte Säume (22) angebracht sind.

8. Airbag (10) gemäß Anspruch 1, wobei der umfängliche Endabschnitt jedes Haltegurt-Segments (14, 54, 56, 74) der ersten Gruppe von Haltegurt-Segmenten (24) am korrespondierenden Haltegurt-Anbringungs-Endabschnitt jedes Haltegurt-Segments (14, 54, 56, 74) der zweiten Gruppe von Haltegurt-Segmenten (24) durch genähte Säume (22) angebracht ist.

9. Airbag (10) gemäß Anspruch 1, wobei das Haltegurt-System des Weiteren zumindest eine Verstärkung (12, 72) umfasst, die am zentralen Bereich eines der Airbagfelde (4, 6) positioniert ist, wobei die Verstärkung (12, 72) des Weiteren an den aufgeweiteten Airbag-Anbringungs-Endabschnitten der Haltegurt-Segmente (14) angebracht ist.

10. Airbag (10) gemäß Anspruch 9, wobei das Haltegurt-System zwei bis fünf Verstärkungen (12, 72) umfasst, die an dem zentralen Bereich des rückwärtigen Airbagfelds (6) angebracht sind.

11. Airbag (10) gemäß Anspruch 9, wobei die Verstärkungen (12, 72) im Wesentlichen eine kreisrunde Form aufweisen.

12. Airbag (10) gemäß Anspruch 1, wobei die Haltegurt-Segmente (14) aus dem Textilgewebe herausgeschnitten sind, welches beschichtet ist.

13. Airbag (10) gemäß Anspruch 1, wobei die Haltegurt-Segmente (14) aus dem Textilgewebe herausgeschnitten sind, das laminiert ist.

14. Haltegurt-Gruppe (24, 28, 36, 46, 64, 66, 84), das in einem Haltegurt-System für einen Airbag verwendet werden soll, wobei die Haltegurt-Gruppe zumindest zwei Haltegurt-Segmente (14, 54, 56, 74) umfasst, wobei jedes der Haltegurt-Segmente eine rechteckige Form aufweist und einen aufgeweiteten Airbag-Anbringungs-Endabschnitt und einen Haltegurt-Anbringungs-Endabschnitt aufweist, und die aufgeweiteten Airbag-Anbringungs-Endabschnitte in gegenüberliegender Beziehung zueinander positioniert sind, und
wobei jedes der Haltegurt-Segmente aus einem Textilgewebe herausgeschnitten ist, das eine Gruppe von Kettfäden und eine Gruppe von Schussfäden aufweist, und wobei die Haltegurt-Segmente im Wesentlichen schräg in Bezug auf die Gruppe von Fäden geschnitten sind.

15. Haltegurt-Gruppe (24, 28, 64, 66, 84) gemäß Anspruch 14, wobei die Haltegurt-Gruppe zwei Haltegurt-Segmente (14, 54, 56, 74) umfasst, deren aufgeweitete Airbag-Anbringungs-Endabschnitte in gegenüberliegender Beziehung zueinander positioniert sind.

16. Haltegurt-Gruppe (36) gemäß Anspruch 14, wobei die Haltegurt-Gruppe drei Haltegurt-Segmente (14) umfasst, deren aufgeweitete Airbag-Anbringungs-Endabschnitte die Ecken eines Dreiecks ausbilden.

17. Haltegurt-Gruppe (46) gemäß Anspruch 14, wobei die Haltegurt-Gruppe vier Haltegurt-Segmente (14) umfasst, deren aufgeweitete Airbag-Anbringungs-Endabschnitte als gegenüberliegende Paare positioniert sind.

18. Haltegurt-Gruppe gemäß Anspruch 14, des Weiteren umfassend eine Verstärkung (12, 72), die zwischen den aufgeweiteten Airbag-Anbringungs-Endabschnitten der Haltegurt-Segmente (14, 74) positioniert ist und an diesen angebracht ist.

19. Haltegurt-Gruppe gemäß Anspruch 18, wobei die Verstärkung (12, 72) im Wesentlichen eine kreisrunde Form aufweist.

20. Haltegurt-Gruppe gemäß Anspruch 18, wobei die Verstärkung im Wesentlichen eine polygonale Form aufweist.

## Revendications

1. Coussin gonflable (10) comportant un panneau de coussin avant (4) et un panneau de coussin arrière (6), lesdits panneaux de coussin (4, 6) ayant une zone centrale et une zone périphérique,
ledit coussin gonflable (10) comportant en outre un système de sangle positionné entre ledit panneau de coussin avant (4) et ledit panneau de coussin arrière (6), ledit système de sangle comportant un premier groupe de segments de sangle (24, 28) et un deuxième groupe de segments de sangle (24, 28);
chaque segment de sangle (14, 54, 56, 74) dudit premier groupe de segments de sangle ayant une partie de fixation de coussin qui est fixée sur la zone centrale dudit panneau de coussin avant (4) et une partie d'extrémité de fixation de sangle qui est positionnée vers la périphérie dudit panneau de coussin avant (4), et
chaque segment de sangle (14, 54, 56, 74) dudit deuxième groupe de segments de sangle ayant une partie de fixation de coussin qui est fixée sur la zone centrale dudit panneau de coussin arrière (6) et une partie d'extrémité de fixation de sangle qui est positionnée vers la périphérie dudit panneau de coussin arrière (6),
et les parties d'extrémité de fixation de sangle dudit premier groupe de segments de sangle (24, 28) étant fixées sur les parties d'extrémité de fixation de sangle dudit deuxième groupe de segments de sangle (14, 54, 56, 74),
chacun desdits premier et deuxième groupes de segments de sangle (24, 28) étant découpé dans une toile ayant un groupe de fil de chaîne et un groupe de fils de remplissage, lesdits segments de sangle (14, 54, 56, 74) étant découpés sensiblement en biais par rapport aux dits groupes de fils, **caractérisé en ce que** chaque segment de sangle (14, 54, 56, 74) desdits premier et deuxième groupes de segments de sangle est d'une forme rectangulaire et chaque partie de fixation de coussin de chaque segment de sangle (14, 54, 56, 74) desdits premier et deuxième groupes de segments de sangle est une partie d'extrémité de fixation de coussin évasée.

2. Coussin gonflable (10) selon la revendication 1, dans lequel ledit premier groupe de segments de sangle (24, 28) possède un premier et un deuxième segment de sangle (14), la partie d'extrémité de fixation de coussin évasée dudit premier segment de sangle (14) étant positionnée autour de la zone centrale dudit panneau de coussin avant (4) en relation opposée à la partie d'extrémité de fixation de coussin évasée dudit deuxième segment de sangle (14), les parties d'extrémité de fixation de coussin évasées desdits premier et deuxième segments de sangle (14) étant fixées sur ledit panneau de coussin avant (4), *1*
et dans lequel chaque dit deuxième groupe de segments de sangle (24, 28) possède un troisième et un quatrième segment de sangle, la partie d'extrémité de fixation de coussin évasée dudit troisième segment de sangle (14) étant positionnée autour de la zone centrale dudit panneau de coussin arrière (6) en relation opposée à la partie d'extrémité de fixation de coussin évasée dudit quatrième segment de sangle (14), les parties d'extrémité de fixation de coussin évasées desdits troisième et quatrième segments de sangle (14) étant fixées sur ledit panneau de coussin arrière (6).

3. Coussin gonflable (10) selon la revendication 1, dans lequel ledit premier groupe de segments de sangle (36) possède trois segments de sangle (14) qui sont positionnés autour de la zone centrale dudit panneau de coussin avant (4) de telle sorte que les parties d'extrémité de fixation de sangle desdits segments de sangle (14) forment les sommets d'un triangle,
et dans lequel ledit deuxième groupe de segments de sangle (36) possède trois segments de sangle qui sont positionnés autour de la zone centrale dudit panneau de coussin arrière (6) de telle sorte que les parties d'extrémité de fixation de sangle desdits segments de sangle forment les sommets d'un triangle.

4. Coussin gonflable (10) selon la revendication 3, dans lequel les parties d'extrémité de fixation de sangle desdits segments de sangle (36) forment les sommets d'un triangle équilatéral.

5. Coussin gonflable (10) selon la revendication 1, dans lequel ledit premier groupe de segments de sangle (46) possède quatre segments de sangle (14), lesdits quatre segments de sangle ayant des parties d'extrémité de fixation de coussin évasées qui sont positionnées sous forme de paires opposées autour de la zone centrale dudit panneau de coussin avant (4), les parties d'extrémité de fixation de coussin évasées dudit premier groupe de segments de sangle (46) étant fixées sur ledit panneau de coussin avant (4),
et dans lequel ledit deuxième groupe de segments de sangle (46) possède quatre segments de sangle (14), lesdits quatre segments de sangle ayant des parties d'extrémité de fixation de coussin évasées qui sont positionnées sous forme de paires opposées autour de la zone centrale dudit panneau de coussin arrière (6), les parties d'extrémité de fixation de coussin évasées dudit deuxième groupe de segments de sangle (46) étant fixées sur ledit panneau de coussin arrière (6).

6. Coussin gonflable (10) selon la revendication 1, dans lequel lesdits segments de sangle (14) sont coupés en biais à 45 degrés.

7. Coussin gonflable (10) selon la revendication 1, dans lequel les parties d'extrémité de fixation de coussin évasées desdits segment de sangle (14) sont fixées sur lesdits panneaux de coussin (4, 6) par des coutures (22).

8. Coussin gonflable (10) selon la revendication 1, dans lequel la partie d'extrémité périphérique de chaque segment de sangle (14, 54, 56, 74) dudit premier groupe de segments de sangle (24) est fixée sur la partie d'extrémité de fixation de sangle correspondante de chaque segment de sangle (14, 54, 56, 74) dudit deuxième groupe de segments de sangle (24) par des coutures (22).

9. Coussin gonflable (10) selon la revendication 1, dans lequel ledit système de sangle comporte en outre au moins un renfort (12, 72) positionné au niveau de la zone centrale d'un desdits panneaux de coussin (4, 6), ledit renfort (12, 72) étant en outre fixé sur les parties d'extrémités de fixation de coussin évasées desdits segments de sangle (14).

10. Coussin gonflable (10) selon la revendication 9, dans lequel ledit système de sangle comporte deux à cinq renforts (12, 72) fixés sur la zone centrale dudit panneau de coussin arrière (6).

11. Coussin gonflable (10) selon la revendication 9, dans lequel lesdits renforts (12, 72) sont d'une forme sensiblement circulaire.

12. Coussin gonflable (10) selon la revendication 1, dans lequel lesdits segments de sangle (14) sont découpés dans ladite toile qui est enduite.

13. Coussin gonflable (10) selon la revendication 1, dans lequel lesdits segments de sangle (14) sont découpés dans ladite toile qui est stratifiée.

14. Groupe de sangles (24, 28, 36, 46, 64, 66, 84) devant être utilisé dans un système de sangle d'un coussin gonflable, ledit groupe de sangles comportant au moins deux segments de sangle (14, 54, 56, 74) dans lequel chacun desdits segments de sangle est d'une forme rectangulaire et possède une partie d'extrémité de fixation de coussin évasée et une partie d'extrémité de fixation de sangle, les parties d'extrémité de fixation de coussin évasées étant positionnées en relation opposée l'une à l'autre, et
dans lequel chacun desdits segments de sangle est découpé dans une toile ayant un groupe de fils de chaîne et un groupe de fils de remplissage, lesdits segments de sangle étant découpés sensiblement en biais par rapport aux dits groupes de fils.

15. Groupe de sangles (24, 28, 64, 66, 84) selon la revendication 14, dans lequel ledit groupe de sangles comporte deux segments de sangle (14, 54, 56, 74) dont les parties d'extrémité de fixation de coussin évasées sont positionnées en relation opposée l'une à l'autre.

16. Groupe de sangles (36) selon la revendication 14, dans lequel ledit groupe de sangle comporte trois segments de sangle (14) dont les parties d'extrémité de fixation de cousin évasées forment les sommets d'un triangle.

17. Groupe de sangles (46) selon la revendication 14, dans lequel ledit groupe de sangles comporte quatre segments de sangle (14) dont les parties d'extrémité de fixation de coussin évasées sont positionnées sous forme de paires opposées.

18. Groupe de sangles selon la revendication 14, comportant en outre un renfort (12, 72) positionné entre et fixé sur les parties d'extrémité de fixation de coussin évasées desdits segments de sangle (14, 74).

19. Groupe de sangles selon la revendication 18, dans lequel ledit renfort (12, 72) est d'une forme sensiblement circulaire.

20. Groupe de sangles selon la revendication 18, dans lequel ledit renfort est d'une forme sensiblement polygonale.
